# FASCICULE DE BREVET EUROPEEN

(11) **EP 2 025 117 B1**
(45) Date de publication et mention de la délivrance du brevet: **22.01.2020**
(21) Numéro de dépôt: 07766061.1
(22) Date de dépôt: 16.05.2007
(51) Int. Cl.: H04L 29/00

(54) **PROCÉDÉ ET DISPOSITIF D'ENVOI DE MESSAGE D'ALERTE DANS UN RÉSEAU**
VERFAHREN UND EINRICHTUNG ZUM SENDEN VON HINWEISNACHRICHTEN IN EINEM NETZWERK
METHOD AND DEVICE TO SEND ALERT MESSAGES IN A NETWORK

(30) Priorité: 17.05.2006 FR 0651796
(43) Date de publication de la demande: 18.02.2009
(73) Titulaire: Orange, 75015 Paris (FR)
(72) Inventeur: DALOZ, Claude, F-22300 Lannion (FR); TOUTAIN, François, F-Louannec 22700 (FR); TEZE, Vincent, F-Landeda 29870 (FR)
(74) Mandataire: Cabinet Beau de Loménie
(86) Numéro de dépôt international: PCT/FR2007/051287
(87) Numéro de publication internationale: WO 2007/132131

(56) Documents cités:
- WO-A-03/036909
- MAHY CISCO SYSTEMS R ET AL: "Conveying Tones in the Session Initiation Protocol (SIP)" IETF STANDARD-WORKING-DRAFT, INTERNET ENGINEERING TASK FORCE, IETF, CH, no. 1, octobre 2003 (2003-10), XP015031933 ISSN: 0000-0004
- CAMARILLO ERICSSON H SCHULZRINNE COLUMBIA UNIVERSITY G: "Early Media and Ringing Tone Generation in the Session Initiation Protocol (SIP)" IETF STANDARD, INTERNET ENGINEERING TASK FORCE, IETF, CH, décembre 2004 (2004-12), XP015009732 ISSN: 0000-0003

## Description

### Arrière-plan de l'invention

L'invention se rapporte au domaine technique des mécanismes d'alerte qui peuvent être utilisés dans des dispositifs de télécommunications.

Au sens de ce document, les "mécanismes d'alerte" concernent tout mécanisme permettant d'avertir un utilisateur de la réception d'un appel et notamment les sonneries, vibreurs, témoins lumineux, affichages d'une image fixe ou animée, seuls ou en combinaison.

On connaît déjà des mécanismes d'alerte de terminaux qui peuvent être configurés, au moyen de menus de l'interface homme-machine de ces terminaux. Il s'agit par exemple de menus permettant de télécharger des sonneries polyphoniques depuis le réseau Internet, ou de choisir un message sonore émis par un ordinateur sur réception d'un courrier électronique.

Le protocole SIP (Session Initiation Protocol) décrit par le document RFC 3261 de l'IETF (Internet Engineering Task Force) offre par ailleurs une possibilité selon laquelle la sonnerie d'un dispositif appelé peut être choisie par l'appelant.

A cet effet, le message INVITE d'initialisation d'appel défini par ce protocole comporte un champ optionnel Alert-Info dans lequel peut être spécifiée, au moyen d'une URL (Uniform Resource Locator), la localisation physique, sur le réseau Internet, d'un fichier audio de sonnerie, par exemple au format ".wav".

Pour plus de renseignements sur ce champ Alert-Info, l'homme du métier pourra se reporter au document RFC 3960 de l'IETF.

Ce mécanisme manque de souplesse et d'interactivité, puisqu'il nécessite d'enregistrer, dans le réseau, le fichier de la sonnerie, avant d'initialiser l'appel.

On notera, au surplus, que cette opération nécessite des moyens techniques particuliers, notamment un accès au réseau Internet, qui ne sont pas nécessairement fournis par le dispositif appelant.

Le document R. Mahy et al., « Conveying Tones in the Session Initiation Protocol (SIP) », IETF standard working draft, Internet engineering Task force, no 1, octobre 2003, XP015031933, ISSN : 0000-0004, divulgue un procédé relatif à une technique de contrôle des appels tiers, connue en anglais sous le nom « third-party call control », dans laquelle un contrôleur établit et gère une communication entre deux autres parties ; l'une des parties écoutant une tonalité de retour d'appel pendant l'établissement d'appel entre le contrôleur et l'autre partie.

### Objet et résumé de l'invention

Selon la revendication 1, l'invention concerne un procédé d'envoi d'un message d'alerte dans un réseau de télécommunications.

L'invention permet donc au dispositif appelant d'émettre un flux multimédia destiné à être restitué par les moyens d'alerte du dispositif appelé, pendant la phase d'établissement d'appel.

Il s'agit donc d'un procédé d'envoi de message d'alerte fortement interactif, puisqu'il ne nécessite pas l'enregistrement préalable d'un fichier sur le réseau avant l'initialisation de l'appel.

Dans ce document, l'expression "flux multimédia" doit être comprise au sens large, puisqu'elle concerne notamment les messages vocaux, visuels, audiovisuels, polyphoniques, de type numérique ou analogique.

L'invention permet donc à l'appelant de définir une sonnerie, des vibrations, des images ou un film animé destinés à être restitués au moins partiellement par les moyens d'alerte du dispositif appelé.

Dans un mode particulier de réalisation, le procédé d'envoi de message d'alerte selon l'invention comporte, en cas de détection d'une prise d'appel par le dispositif appelé, une étape d'établissement d'un canal de communication bidirectionnel entre le dispositif appelant et le dispositif appelé.

Dans ce mode de réalisation, si le dispositif appelé prend la ligne, soit automatiquement, soit parce que son utilisateur "décroche", on établit un canal de communication entre l'appelant et l'appelé.

Cette caractéristique permet donc de mettre en œuvre un mécanisme classique de répondeur téléphonique dans lequel l'utilisateur du dispositif appelé peut choisir ou ne pas choisir de prendre la ligne, en fonction du message restitué par les moyens d'alerte de son dispositif.

Dans un mode particulier de réalisation de l'invention, le flux multimédia émis par le dispositif appelant transporte un message vocal.

Préférentiellement, ce message vocal est un message dicté par l'utilisateur du dispositif appelant pendant la phase d'établissement de l'appel.

L'appelant peut ainsi, de façon très explicite, se présenter et demander à l'utilisateur du dispositif appelé de prendre la ligne.

Dans un autre mode particulier de réalisation de l'invention, le flux multimédia émis par le dispositif appelant transporte un message vidéo.

Dans un mode particulier de réalisation de l'invention, le procédé d'envoi comporte une étape d'enregistrement du flux multimédia.

Cette étape trouve une utilisation privilégiée lorsque l'invention est utilisée dans un système de messagerie, puisque l'utilisateur du dispositif appelé peut, dans ce cas, réécouter ultérieurement le message enregistré s'il est absent ou s'il décide de ne pas prendre la ligne pendant l'écoute du message vocal lors de la phase d'établissement d'appel.

Dans un mode particulier de réalisation de l'invention, la transmission du flux multimédia vers le dispositif appelé se fait en réponse à une requête (par exemple de type HTTP - HyperText Transfer Protocol) émise par le dispositif appelé lui-même.

A cet effet, on enregistre le flux multimédia émis par le dispositif appelant dans une mémoire tampon accessible par un serveur de message, et on envoie, au dispositif appelé, une requête d'établissement d'appel dont un champ comporte au moins un paramètre d'identification de la mémoire tampon, de sorte que le serveur de message est apte à transmettre au moins une partie du flux multimédia au dispositif appelé sur réception d'une requête comportant le paramètre.

Dans un mode particulier de réalisation de l'invention, ce champ est un champ du type Alert-Info tel que défini par la norme SIP, le paramètre d'identification étant exprimé sous forme d'un indicateur pointant vers la mémoire tampon.

Cet indicateur peut notamment être constitué par une adresse, par exemple de type URL, ou par un lien hypertexte.

Dans un mode particulier de réalisation, les différentes étapes du procédé d'envoi de message d'alerte sont déterminées par des instructions de programmes d'ordinateurs.

En conséquence, l'invention vise aussi un programme d'ordinateur selon la revendication 8.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur selon la revendication 9.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif plateforme selon la revendication 6.

L'invention vise également un système de messagerie selon la revendication 7. Des modes de réalisation particuliers de l'invention sont fournis par les revendications dépendantes.

Les avantages et caractéristiques particulières du dispositif plateforme du système de messagerie selon l'invention sont identiques à ceux du procédé d'envoi de message d'alerte déjà mentionnés. Ils ne seront donc pas rappelés ici.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1A représente, sous forme d'organigramme, les principales étapes d'un procédé d'envoi de messages d'alerte conforme à l'invention dans un premier mode de réalisation ;
- la figure 1B représente un dispositif plateforme conforme à l'invention adapté à mettre en œuvre le procédé de la figure 1A ;
- la figure 2A représente, sous forme d'organigramme, les principales étapes d'un procédé d'envoi de message d'alerte conforme à l'invention dans un deuxième mode de réalisation ;
- la figure 2B représente un système de messagerie conforme à l'invention adapté à mettre en œuvre le procédé de la figure 2A ; et
- les figures 3 et 4 représentent un procédé d'envoi de message d'alerte conforme à l'invention dans le contexte du protocole SIP.

### Description détaillée de plusieurs modes de réalisation

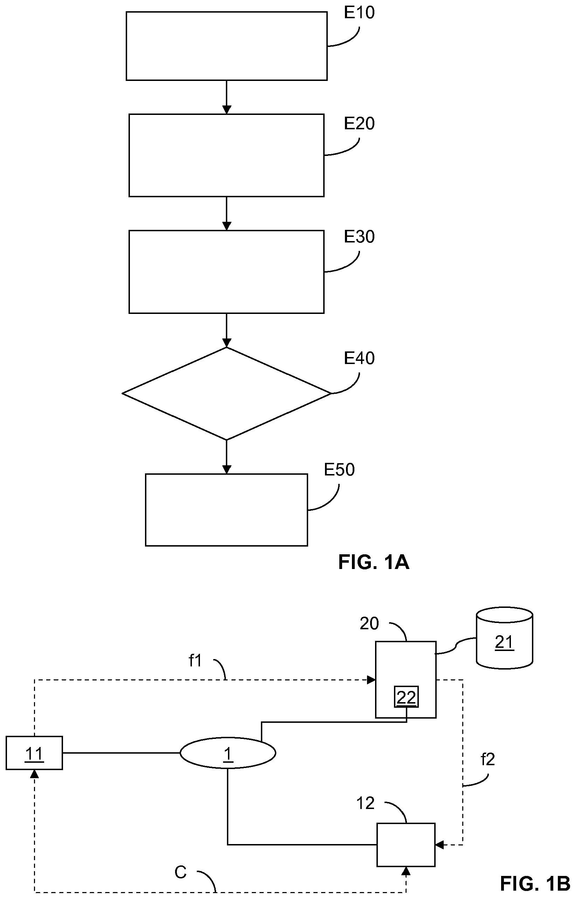

La **figure 1A** représente, sous forme d'organigramme, les principales étapes d'un procédé d'envoi de message d'alerte conforme à l'invention dans un premier mode de réalisation.

Ce procédé peut être mis en œuvre par un dispositif plateforme 20 conforme à l'invention représenté, dans son contexte, à la **figure 1B****.**

Dans l'exemple décrit ici, ce dispositif plateforme 20 a l'architecture matérielle d'un ordinateur conventionnel. Il comporte notamment un processeur, une mémoire morte et une mémoire vive non représentés et des moyens de communication 22 par lesquels il est relié à un réseau de télécommunications 1.

La mémoire morte du dispositif plateforme 20 comporte un programme d'ordinateur conforme à l'invention dont les instructions permettent la mise en œuvre de l'organigramme de la figure 1A.

Nous supposerons, dans cet exemple, que le dispositif de communication 11 souhaite établir une communication avec le dispositif de communication 12 et que, lors de la phase d'établissement d'appel, un flux vidéo obtenu par une caméra du dispositif appelant 11 s'affiche sur l'écran du dispositif appelé 12.

Nous supposerons que le dispositif appelant 11 émet une requête d'établissement d'appel à destination du dispositif appelé 12 et que cette requête est interceptée par le dispositif plateforme 20 conforme à l'invention au cours d'une première étape E10 du procédé d'envoi de message d'alerte conforme à l'invention.

Puis, les images vidéo acquises par la caméra du dispositif appelant 11 sont émises, dans un premier flux multimédia f1, reçu par les moyens 22 de communication du dispositif plateforme 20, au cours d'une étape E20. Ce flux vidéo est mémorisé, au cours de cette même étape, dans une mémoire 21 du dispositif plateforme 20.

Simultanément, c'est-à-dire dès interception de la requête d'établissement d'appel, le dispositif plateforme 20 émet une requête d'établissement d'appel à destination du dispositif 12 destinataire choisi à l'origine par le dispositif appelant 11.

L'envoi de ce message d'initialisation d'appel participe, comme de façon connue, à la phase d'établissement d'appel entre le dispositif appelant 11 et le dispositif appelé 12.

Au cours d'une étape E30 de cette phase d'établissement d'appel, le dispositif plateforme 20 conforme à l'invention transmet, vers le dispositif appelé 12, une partie des images vidéo acquises par la caméra du dispositif appelant 11 et mémorisées, comme décrit précédemment, dans la mémoire 21.

Ce flux d'images vidéo, référence f2 sur la figure 1B, est un flux réduit par rapport au premier flux f1, de façon à ce que les images vidéo reçues par le dispositif appelé 12 soient compatibles avec les moyens d'affichage de ce dispositif.

Bien entendu, en variante, le deuxième flux f2 peut être identique au premier flux f1.

Au cours de cette même étape E30, les moyens d'affichage du dispositif appelé 12, qui constituent des moyens d'alerte au sens de l'invention, restituent intégralement le flux multimédia f2 reçu en provenance du dispositif plateforme 20.

On comprend donc que l'utilisateur du dispositif de réception 12 voit, sur son écran, la scène acquise par la caméra du dispositif appelant 11.

Dans l'exemple décrit ici, on supposera que le dispositif de communication 12 est configuré de sorte qu'il prend la ligne après un délai prédéterminé compté à partir du début de la réception de ce flux multimédia f2.

Cette prise de ligne termine la phase d'établissement d'appel entre le dispositif appelant 11 et le dispositif appelé 12.

Cette étape se traduit par l'envoi d'un message d'acceptation d'appel émis par le dispositif appelé 12 à destination du dispositif plateforme 20 conformément à l'invention.

Nous supposerons que le dispositif plateforme 20 conforme à l'invention détecte cette prise d'appel au cours de cette même étape E40.

Dans l'exemple de réalisation décrit ici, consécutivement à cette détection de prix d'appel, le dispositif plateforme 20 établit un canal C de communication bidirectionnel entre le dispositif appelant 11 et le dispositif appelé 12.

Ce canal C de communication bidirectionnel permet, comme de façon connue, d'établir une communication téléphonique entre les utilisateurs de ces deux terminaux.

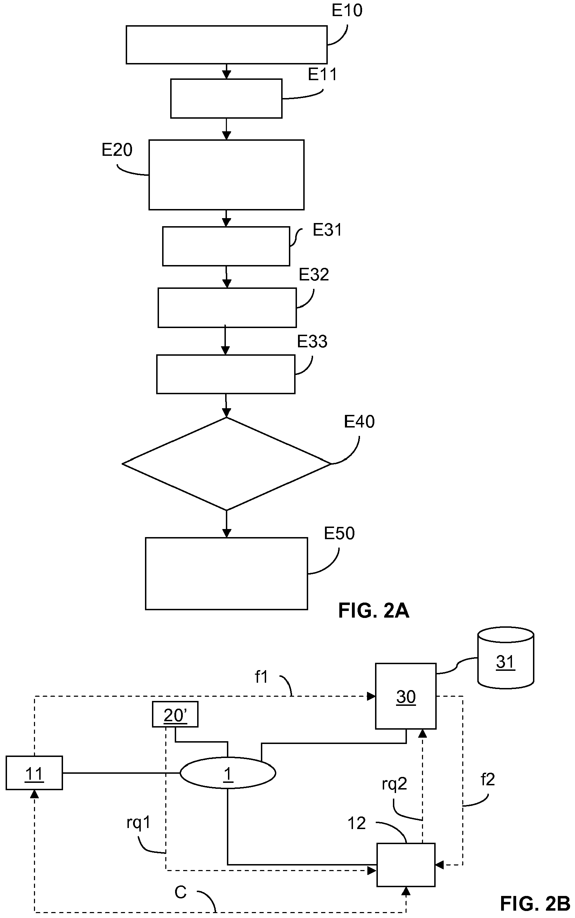

Nous allons maintenant décrire, en référence aux **figures 2A et 2B****,** un deuxième mode de réalisation de l'invention.

Ce deuxième mode de réalisation correspond à une application de messagerie.

La **figure 2A** représente, sous forme d'organigramme, un procédé d'envoi de message d'alerte conforme à l'invention dans ce deuxième mode de réalisation. Il peut être mis en forme par un système de messagerie conforme à l'invention représenté, dans son contexte, à la **figure 2B****.**

Ce système de messagerie se compose principalement d'un dispositif plateforme 20' et d'un serveur de message 30, ces deux équipements comportant, dans cet exemple, l'architecture matérielle d'un ordinateur conventionnel.

Dans l'exemple de la figure 2B, ces deux équipements sont distincts. En variante, ils pourraient être constitués par un seul ordinateur.

Nous supposerons, comme dans le premier mode de réalisation, que le dispositif plateforme 20' détecte, au cours d'une première étape E10, une requête d'établissement d'appel émise par le dispositif appelant 11, à destination du dispositif appelé 12.

Ce deuxième mode de réalisation correspond à une application de messagerie.

Sur réception de ce message d'initialisation d'appel, le dispositif plateforme 20' envoie, au cours d'une étape E11, une requête d'établissement d'appel rq1 au dispositif de communication appelé 12. Cette requête rq1 possède un champ qui comporte une URL pointant sur une mémoire tampon 31 du serveur de message 30.

Dans cet exemple, nous supposerons que l'utilisateur du dispositif appelant 11 émet un message vocal destiné à être reproduit à titre de sonnerie par le haut-parleur du dispositif appelé 12 pendant la phase d'établissement d'appel.

Ce message vocal est émis sous forme d'un flux multimédia f1, reçu par le dispositif plateforme 20' au cours d'une étape E20.

Puis, le flux multimédia f1 est routé par le dispositif plateforme 20', vers la mémoire tampon 31 du serveur de message 30, au cours d'une étape E31.

Lorsque le dispositif appelé 12 reçoit la requête d'établissement d'appel rq1, il émet, au cours d'une étape E32, une deuxième requête rq2 à destination du serveur de message 30, pour télécharger les données multimédia mémorisées dans la mémoire tampon 31.

On établit ainsi, au cours d'une étape E33, un flux f2 de données entre le serveur de message 30 et le dispositif appelé 12 dans lequel est véhiculé le message vocal émis par le dispositif appelant 11 et tamponné dans la mémoire 31.

Le message vocal émis par l'utilisateur du dispositif appelant 11 est donc restitué, avec un léger décalage dû à sa mémorisation dans la mémoire tampon 31, par le haut-parleur du dispositif appelé 12.

Dans cet exemple de réalisation, le dispositif plateforme 20' est capable de détecter, au cours d'une étape E40, la prise de ligne par le dispositif appelé 12, par exemple par l'action volontaire de l'utilisateur de ce dispositif, et à établir, au cours d'une étape E50, un canal de communication bidirectionnel entre le dispositif appelant 11 et le dispositif appelé 12, référencé C.

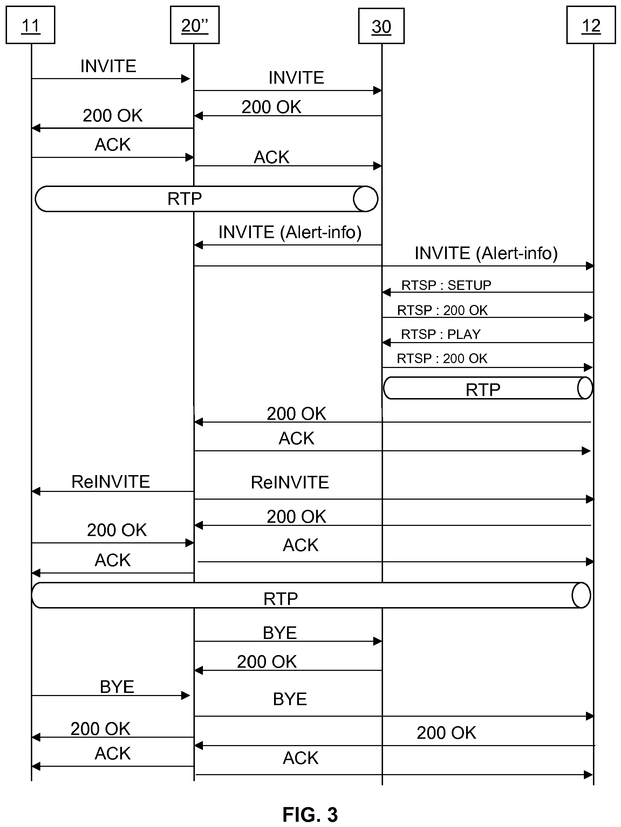

Nous allons maintenant décrire en référence à la **figure 3** un procédé d'envoi de message d'alerte conforme à l'invention dans le contexte du protocole SIP.

Au cours d'une première étape, le dispositif appelant 11 initie un établissement d'appel vers le dispositif appelé 12.

Par suite d'un renvoi vers une messagerie configurée au niveau d'un serveur SIP 20", la demande d'appel est transférée vers un serveur de boîte vocale 30 avec lequel la communication s'établit.

Un service traditionnel de messagerie débute avec invitation à déposer un message.

En parallèle, le serveur de boîte vocale 30 entreprend un établissement d'appel en direction du dispositif appelé 12. Cet établissement d'appel transite par la plateforme SIP 20" qui court-circuite le renvoi sur messagerie.

Lors de l'étape de dépôt de message, le signal audio émis par le dispositif appelant 11 est envoyé vers le dispositif appelé 12 sous la forme d'une sonnerie à présenter.

De la sorte, l'utilisateur du dispositif appelé 12 peut écouter le message déposé à son intention par l'appelant 11, sans aucune intervention, pendant la phase d'établissement d'appel.

Il peut également décrocher son terminal et ainsi répondre à la demande d'appel du serveur de boîte vocale 30. Dans ce cas, on aboute les deux demi-appels de sorte que les terminaux 11 et 12 soient mis en relation.

Afin de simplifier la description, nous supposerons que nous sommes dans le cas d'un renvoi automatique et immédiat sur le serveur de boîte vocale 30.

Nous allons maintenant décrire ce mécanisme plus en détail.

Tout d'abord, le terminal appelant 11 émet, conformément au protocole SIP, un message INVITE d'initialisation d'appel.

Ce message, reçu par la plateforme SIP, est transmis au serveur de boîte vocale 30.

Nous supposerons que le serveur de boîte vocale 30 répond positivement à cette invitation, de sorte que deux messages SIP de type 200 OK sont émis, le premier du serveur de boîte vocale 30 vers la plateforme SIP 20" et le deuxième de cette plateforme SIP 20" vers le dispositif appelant 11.

Nous supposerons également que ces réponses positives sont acquittées.

Il s'établit alors un canal de communication conforme au protocole RTP (Real Time Protocol) pour transporter, en temps réel, le message vocal émis par le dispositif appelant 11 vers le serveur de boîte vocale 30.

Ensuite, le serveur de boîte vocale 30 crée une requête INVITE d'établissement d'appel transmise à l'appelé 12 via la plateforme de service SIP 20".

Cette requête comporte un champ particulier Alert-Info qui véhicule l'adresse de ressource du flux de données qui sera utilisé par le terminal appelé 12 comme sonnerie.

Conformément à la norme SIP, ce champ est exprimé par une URL (Universal Resource Identifier), par exemple du type : rtsp://mediaserver.operateur.com/streaming.exe?session_id=E2T54G6.

De façon connue, le protocole RTSP (Real Time Streaming Protocol) tel que défini dans le document RFC 2326 de l'IETF permet la diffusion de flux multimédias par des serveurs de messages en mode streaming.

Simultanément à l'envoi de ce message d'invitation INVITE, le serveur de boîte vocale 30 crée ou active une instance de serveur RTSP qui le met en attente d'une requête émanant d'un dispositif client.

Lorsque le message d'invitation INVITE est traité par le terminal appelé 12, celui-ci décode le champ "Alert-Info" et en déduit l'action de connexion au serveur RTSP.

Ceci se traduit par les requêtes RTSP de type "SET UP" puis "PLAY".

Une fois cette connexion réalisée, le message vocal mémorisé par le serveur de boîte vocale 30 est reçu en mode streaming, par un flux de données RTP, et sert de sonnerie sur le terminal appelé 12.

L'utilisateur du dispositif appelé peut ainsi entendre le message déposé par l'appelant sans prendre la ligne.

Nous supposerons que l'appelé décroche.

Ceci provoque, de la part de la logique de service localisée dans la plateforme de service SIP 20", l'émission de deux messages ReINVITE qui véhiculent des descriptions de sessions modifiées pour prendre en compte les nouvelles extrémités de la communication.

Plus précisément, le message ReINVITE transmis au dispositif appelant 11 transporte la description de session permettant d'ouvrir les flux de données vers l'appelé 12 et le message ReINVITE transmis au dispositif appelé 12 transporte la description de session lui permettant d'ouvrir les flux de données avec l'appelant 11.

Par ailleurs, la même logique de contrôle du service de la plateforme SIP 20" émet un message BYE mettant fin à la communication avec le serveur de boîte vocale 30.

A l'issue de la communication entre l'appelant 11 et l'appelé 12, la terminaison d'appel est gérée de façon traditionnelle et connue.

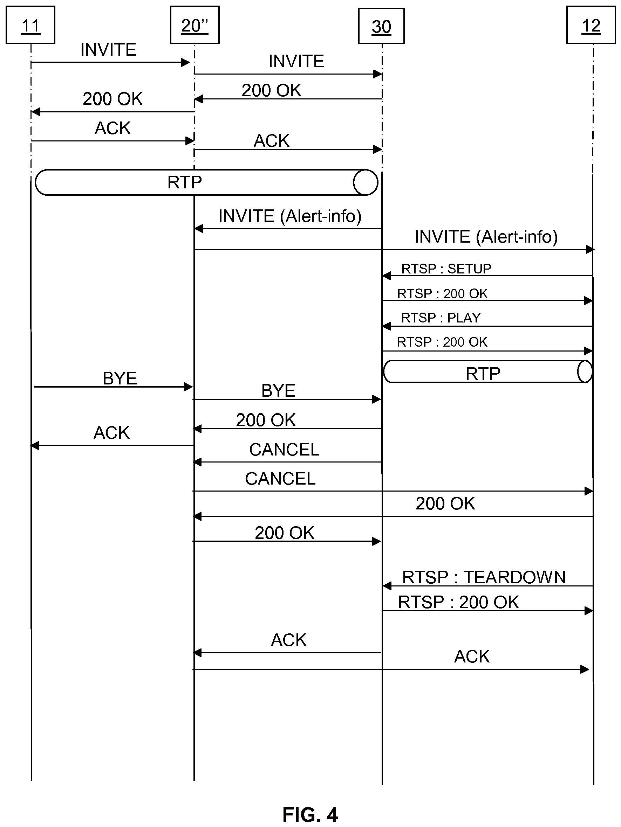

En référence à la **figure 4****,** nous supposerons que l'appelé ne décroche pas.

Dans le mode de réalisation décrit ici, l'interaction entre l'appelant et le serveur de boîte vocale 30 se poursuit jusqu'à conclusion du dépôt de message suivi, de façon connue, par le raccroché du dispositif appelant 11.

Dans la cinématique ci-après, c'est l'appelant 11 qui raccroche.

L'établissement d'appel qui était en cours entre le serveur de boîte vocale 30 et le dispositif appelé 12 est alors interrompu par le mécanisme traditionnel (message CANCEL).

Le terminal appelé 12 cesse de sonner et met fin à la connexion par laquelle il recevait les données audio du serveur de boîte vocale 30 à l'aide de la requête TEARDOWN du protocole RTSP.

Il est à noter que dans les modes de réalisation de l'invention décrits ici, les messages SIP "Trying" ne sont pas représentés afin d'alléger les diagrammes de flux des figures 3 et 4 ainsi que la description de ces diagrammes.

## Revendications

1. Procédé d'envoi d'un message d'alerte dans un réseau (1) de télécommunications, ce procédé comportant :
- une étape (E10) d'interception, par un dispositif plateforme (20, 20', 20") d'une requête d'établissement d'appel émise par un dispositif appelant (11) à destination d'un dispositif appelé (12),
- dès ladite interception (E10), une étape d'émission par ledit dispositif plateforme (20, 20', 20") d'une requête (rq1, INVITE (Alert-info)) d'établissement d'appel audit dispositif appelé (12), ladite émission participant à la phase d'établissement d'appel entre ledit dispositif appelant (11) et ledit dispositif appelé (12),
ledit procédé étant **caractérisé en ce qu'**il comporte en outre :
- suite à ladite interception (E10), une étape (E20) de réception, par ledit dispositif plateforme (20, 20') ou par un serveur (30) compris dans un système comprenant ledit dispositif plateforme (20'), d'un flux multimédia (f1) émis par le dispositif appelant (11), et
- une étape (E30, E30') de transmission, par ledit dispositif plateforme (20) ou par ledit serveur (30), vers ledit dispositif appelé (12) pendant ladite phase d'établissement dudit appel, d'au moins une partie (f2) dudit flux multimédia (f1), ladite partie (f2) pouvant être restituée, au moins partiellement, par des moyens d'alerte dudit dispositif appelé (12).

2. Procédé d'envoi selon la revendication 1, **caractérisé en ce qu'**il comporte, en cas de détection (E40) d'une prise d'appel par ledit dispositif appelé (12), une étape (E50) d'établissement d'un canal (C) de communication bidirectionnel entre ledit dispositif appelant (11) et ledit dispositif appelé (12).

3. Procédé d'envoi selon la revendication 1 ou 2, **caractérisé en ce que** ledit flux multimédia (f1) émis par le dispositif appelant (11) transporte un message vocal ou un message vidéo.

4. Procédé d'envoi selon l'une quelconque des revendications 1 à 3, **caractérisé en ce qu'**il comporte suite à ladite étape (E10) de réception d'une requête d'établissement d'appel :
- une étape (E31) d'enregistrement dudit flux multimédia (f1) dans une mémoire tampon (31) accessible par un serveur de message (30) ; et
- une étape d'envoi, audit dispositif appelé (12), d'une requête d'établissement d'appel (rq1) dont un champ comporte au moins un paramètre d'identification de ladite mémoire tampon (31), de sorte que ledit serveur de message (30) est apte à transmettre ladite au moins une partie (f2) dudit flux multimédia (f1) audit dispositif appelé (12) sur réception d'une requête (rq2) comportant ledit paramètre.

5. Procédé d'envoi selon la revendication 4, **caractérisé en ce que** ledit champ est un champ du type " Alert-Info " tel que défini par la norme SIP, ledit paramètre d'identification étant exprimé sous forme d'un indicateur pointant vers ladite mémoire tampon (31).

6. Dispositif plateforme (20), susceptible d'être mis en œuvre par un opérateur dans un réseau (1) de télécommunications, comportant des moyens (22) d'interception d'une requête d'établissement d'appel émise par un dispositif appelant (11) à destination d'un dispositif appelé (12) et des moyens d'émission, dès ladite interception et pendant la phase d'établissement d'appel entre ledit dispositif appelant (11) et ledit dispositif appelé (12), d'une requête d'établissement d'appel audit dispositif appelé (12), ledit dispositif plateforme (20) étant **caractérisé en ce qu'**il comporte en outre :
- des moyens (22) de réception d'un flux multimédia (f1) émis par ledit dispositif appelant (11), suite à ladite interception de ladite requête d'établissement d'appel,
et des moyens (22) de transmission vers ledit dispositif appelé (12), pendant ladite phase d'établissement dudit appel, d'au moins une partie (f2) dudit flux multimédia (f1), ladite partie pouvant être restituée au moins partiellement, par des moyens d'alerte dudit dispositif appelé (12).

7. Système de messagerie, susceptible d'être mis en œuvre par un opérateur dans un réseau de télécommunications, comportant :
- un dispositif plateforme (20') comportant des moyens (22) d'interception d'une requête d'établissement d'appel émise par un dispositif appelant (11) à destination d'un dispositif appelé (12) et des moyens (22) de réception d'un flux multimédia (f1) émis par ledit dispositif appelant (11), ledit système est **caractérisé en ce qu'**il comporte en outre :
- un serveur (30) de message comportant des moyens d'accès à une mémoire et des moyens d'enregistrement dans ladite mémoire d'au moins une partie (f2) dudit flux multimédia (f1) pouvant être restituée au moins partiellement par des moyens d'alerte dudit dispositif appelé (12),
- et des moyens (22) d'envoi audit dispositif appelé (12), dès ladite interception, d'une requête d'établissement d'appel (rq1) dont un champ comporte au moins un paramètre d'identification de ladite mémoire, de sorte que ledit serveur de message (30) est adapté à transmettre, pendant la phase d'établissement dudit appel entre ledit dispositif appelant (11) et ledit dispositif appelé (12), ladite au moins une partie dudit flux multimédia (f1) en cours d'enregistrement audit dispositif appelé (12) sur réception d'une requête (rq2) comportant ledit paramètre.

8. Programme d'ordinateur comportant des instructions pour l'exécution des étapes du procédé d'envoi de message d'alerte selon l'une quelconque des revendications 1 à 5 lorsque ledit programme est exécuté par un ordinateur.

9. Support d'enregistrement lisible par un ordinateur sur lequel est enregistré un programme d'ordinateur comprenant des instructions pour l'exécution des étapes du procédé d'envoi de message d'alerte selon l'une quelconque des revendications 1 à 5.

## Patentansprüche

1. Verfahren zum Senden einer Alert-Nachricht in einem Telekommunikationsnetzwerk (1), wobei dieses Verfahren aufweist:
- einen Schritt (E10) des Abhörens einer von einer anrufenden Vorrichtung (11) an eine angerufene Vorrichtung (12) gesendeten Anrufaufbau-Anforderung durch eine Plattformvorrichtung (20, 20', 20"),
- ab dem Abhören (E10) einen Schritt des Sendens einer Anrufaufbau-Anforderung (rq1, INVITE (Alert-info)) durch die Plattformvorrichtung (20, 20', 20") an die angerufene Vorrichtung (12), wobei das Senden an der Anrufaufbauphase zwischen der anrufenden Vorrichtung (11) und der angerufenen Vorrichtung (12) beteiligt ist,
wobei das Verfahren **dadurch gekennzeichnet ist, dass** es außerdem aufweist:
- nach dem Abhören (E10) einen Schritt (E20) des Empfangs eines von der anrufenden Vorrichtung (11) gesendeten Multimediastroms (f1) durch die Plattformvorrichtung (20, 20') oder durch einen in einem die Plattformvorrichtung (20') enthaltenden System enthaltenen Server (30), und
- einen Schritt (E30, E30') der Übertragung mindestens eines Teils (f2) des Multimediastroms (f1) während der Aufbauphase des Anrufs an die angerufene Vorrichtung (12) durch die Plattformvorrichtung (20) oder durch den Server (30) wobei der Teil (f2) zumindest teilweise von Alert-Einrichtungen der angerufenen Vorrichtung (12) wiedergegeben werden kann.

2. Sendeverfahren nach Anspruch 1, **dadurch gekennzeichnet, dass** es im Fall der Erfassung (E40) einer Anrufannahme durch die angerufene Vorrichtung (12) einen Schritt (E50) des Aufbaus eines bidirektionalen Kommunikationskanals (C) zwischen der anrufenden Vorrichtung (11) und der angerufenen Vorrichtung (12) aufweist.

3. Sendeverfahren nach Anspruch 1 oder 2, **dadurch gekennzeichnet, dass** der von der anrufenden Vorrichtung (11) gesendete Multimediastrom (f1) eine Sprachnachricht oder eine Videonachricht transportiert.

4. Sendeverfahren nach einem der Ansprüche 1 bis 3, **dadurch gekennzeichnet, dass** es nach dem Schritt (E10) des Empfangs einer Anrufaufbau-Anforderung aufweist:
- einen Schritt (E31) des Speicherns des Multimediastroms (f1) in einem für einen Nachrichtenserver (30) zugänglichen Pufferspeicher (31); und
- einen Schritt des Sendens einer Anrufaufbau-Anforderung (rq1) an die angerufene Vorrichtung (12), von der ein Feld mindestens einen Identifikationsparameter des Pufferspeichers (31) aufweist, so dass der Nachrichtenserver (30) den mindestens einen Teil (f2) des Multimediastroms (f1) bei Empfang einer den Parameter aufweisenden Anforderung (rq2) an die angerufene Vorrichtung (12) übertragen kann.

5. Sendeverfahren nach Anspruch 4, **dadurch gekennzeichnet, dass** das Feld ein Feld des Typs "Alert-Info" ist, wie es durch die Norm SIP definiert wird, wobei der Identifikationsparameter in Form eines Indikators ausgedrückt wird, der zum Pufferspeicher (31) weist.

6. Plattformvorrichtung (20), die von einem Betreiber in einem Telekommunikationsnetzwerk (1) verwendet werden kann, die Einrichtungen (22) zum Abhören einer von einer anrufenden Vorrichtung (11) an eine angerufene Vorrichtung (12) gesendeten Anrufaufbau-Anforderung und Einrichtungen zum Senden einer Anrufaufbau-Anforderung an die angerufene Vorrichtung (12) ab dem Abhören und während der Phase des Anrufaufbaus zwischen der anrufenden Vorrichtung (11) und der angerufenen Vorrichtung (12) aufweist, wobei die Plattformvorrichtung (20) **dadurch gekennzeichnet ist, dass** sie außerdem aufweist:
- Einrichtungen (22) zum Empfang eines von der anrufenden Vorrichtung (11) gesendeten Multimediastroms (f1) nach dem Abhören der Anrufaufbau-Anforderung,
- und Einrichtungen (22) zur Übertragung an die angerufene Vorrichtung (12), während der Aufbauphase des Anrufs, mindestens eines Teils (f2) des Multimediastroms (f1), wobei der Teil zumindest teilweise von Alert-Einrichtungen der angerufenen Vorrichtung (12) wiedergegeben werden kann.

7. Nachrichtenübermittlungssystem, das von einem Betreiber in einem Telekommunikationsnetzwerk angewendet werden kann, das aufweist:
- eine Plattformvorrichtung (20'), die Einrichtungen (22) zum Abhören einer von einer anrufenden Vorrichtung (11) an eine angerufene Vorrichtung (12) gesendeten Anrufaufbau-Anforderung und Einrichtungen (22) zum Empfang eines von der anrufenden Vorrichtung (11) gesendeten Multimediastroms (f1) aufweist,
wobei das System **dadurch gekennzeichnet ist, dass** es außerdem aufweist:
- einen Nachrichtenserver (30), der Einrichtungen für den Zugriff auf einen Speicher und Einrichtungen zum Speichern zumindest eines Teils (f2) des Multimediastroms (f1) in diesem Speicher aufweist, der zumindest teilweise von Alert-Einrichtungen der angerufenen Vorrichtung (12) wiedergegeben werden kann,
- und Einrichtungen (22) zum Senden an die angerufene Vorrichtung (12) ab dem Abhören einer Anrufaufbau-Anforderung (rq1), von der ein Feld mindestens einen Identifikationsparameter des Speichers aufweist, so dass der Nachrichtenserver (30) geeignet ist, während der Aufbauphase des Anrufs zwischen der anrufenden Vorrichtung (11) und der angerufenen Vorrichtung (12) den mindestens einen Teil des Multimediastroms (f1), der gerade gespeichert wird, bei Empfang einer den Parameter aufweisenden Anforderung (rq2) an die angerufene Vorrichtung (12) zu übertragen.

8. Computerprogramm, das Anweisungen zur Ausführung der Schritte des Sendeverfahrens einer Alert-Nachricht nach einem der Ansprüche 1 bis 5 aufweist, wenn das Programm von einem Computer ausgeführt wird.

9. Computerlesbarer Speicherträger, auf dem ein Computerprogramm gespeichert ist, das Anweisungen zur Ausführung der Schritte des Sendeverfahrens einer Alert-Nachricht nach einem der Ansprüche 1 bis 5 enthält.

## Claims

1. Method for dispatching an alert message in a telecommunications network (1), this method comprising:
- a step (E10) of intercepting, by a platform device (20, 20', 20"), a call setup request emitted by a calling device (11) destined for a called device (12),
- upon said interception (E10), a step of emitting by said platform device (20, 20', 20"), a call setup request (rq1, INVITE (Alert-info)) to said called device (12), said emission participating in the phase of call setup between said calling device (11) and said called device (12),
said method being **characterized in that** it furthermore comprises:
- subsequent to said interception (E10), a step (E20) of receiving, by said platform device (20, 20') or by a server (30) included in a system comprising said platform device (20'), a multimedia stream (f1) emitted by the calling device (11), and
- a step (E30, E30') of transmitting, by said platform device (20) or by said server (30), to said called device (12) during said setup phase of said call, at least one part (f2) of said multimedia stream (f1), said part (f2) being able to be restored, at least partially, by alert means of said called device (12).

2. Dispatching method according to Claim 1, **characterized in that** it comprises, in the event of detecting (E40) a call pick-up by said called device (12), a step (E50) of setting up a bidirectional communication channel (C) between said calling device (11) and said called device (12).

3. Dispatching method according to Claim 1 or 2, **characterized in that** said multimedia stream (f1) emitted by the calling device (11) transports a voice message or a video message.

4. Dispatching method according to any one of Claims 1 to 3, **characterized in that** it comprises following said step (E10) of receiving a call setup request:
- a step (E31) of recording said multimedia stream (f1) in a buffer memory (31) accessible by a message server (30); and
- a step of dispatching, to said called device (12), a call setup request (rq1), a field of which comprises at least one parameter identifying said buffer memory (31), so that said message server (30) is able to transmit said at least one part (f2) of said multimedia stream (f1) to said called device (12) on receiving a request (rq2) comprising said parameter.

5. Dispatching method according to Claim 4, **characterized in that** said field is a field of the "Alert-Info" type such as defined by the SIP standard, said identifying parameter being expressed in the form of an indicator pointing to said buffer memory (31).

6. Platform device (20), able to be implemented by an operator in a telecommunications network (1), comprising means (22) for intercepting a call setup request emitted by a calling device (11) destined for a called device (12) and means of emitting, upon said interception and during the phase of call setup between said calling device (11) and said called device (12), a call setup request to said call device (12), said platform device (20) being **characterized in that** it furthermore comprises:
- means (22) for receiving a multimedia stream (f1) emitted by said calling device (11), following said interception of said call setup request,
- and means (22) for transmitting to said called device (12), during said call setup phase, at least one part (f2) of said multimedia stream (f1), said part being able to be restored at least partially, by alert means of said called device (12).

7. Messaging system, able to be implemented by an operator in a telecommunications network, comprising:
- a platform device (20') comprising means (22) for intercepting a call setup request emitted by a calling device (11) destined for a called device (12) and means (22) for receiving a multimedia stream (f1) emitted by said calling device (11), said system being **characterized in that** it furthermore comprises:
- a message server (30) comprising means for accessing a memory and means for recording in said memory at least one part (f2) of said multimedia stream (f1) that can be restored at least partially by alert means of said called device (12),
- and means (22) for dispatching, to said called device (12), from said interception a call setup request (rq1), a field of which comprises at least one parameter identifying said memory, so that said message server is adapted to transmit, during the setup phase of said call between said calling device (11) and said called device (12), said at least one part of said multimedia stream (f1) undergoing recording to said called device (12) on receiving a request (rq2) comprising said parameter.

8. Computer program comprising instructions for executing the steps of the alert message dispatching method according to any one of Claims 1 to 5 when said program is executed by a computer.

9. Recording medium readable by a computer on which is recorded a computer program comprising instructions for executing the steps of the alert message dispatching method according to any one of Claims 1 to 5.
